# EUROPEAN PATENT SPECIFICATION

(11) **EP 0 782 596 B1**
(45) Date of publication and mention of the grant of the patent: **09.06.1999**
(21) Application number: 95931330.5
(22) Date of filing: 15.09.1995
(51) Int. Cl.: C08J 9/33, C08J 11/06

(54) **PRE-MIXED POLYMER COMPOSITIONS**
VORGEMISCHTE POLYMERZUSAMMENSETZUNGEN
COMPOSITIONS POLYMERES PREMELANGEES

(30) Priority: 20.09.1994 GB 9418889
(43) Date of publication of application: 09.07.1997
(73) Proprietor: Bowers, Jacqueline Mary, Nicosia (CY); Bowers, Frank, Nicosia (CY)
(72) Inventor: BOWERS, Frank, Geri, Nicosia (CY)
(74) Representative: Lawrence, John Gordon
(86) International application number: GB9502181
(87) International publication number: WO9609338

(56) References cited:
- EP-A- 0 005 473
- EP-A- 0 216 344
- WO-A-93/06991
- US-A- 4 107 100
- US-A- 4 112 176
- DATABASE WPI Derwent Publications Ltd., London, GB; AN 84-097117[16] & JP,A,59 041 501 (DAIICHI KOGYO SEIYAKU) 7 March 1984
- DATABASE WPI Derwent Publications Ltd., London, GB; AN 75-43324W[26] & JP,A,49 106 533 (HODOGAYA CHEM. IND. KK.) 9 October 1974
- DATABASE WPI Derwent Publications Ltd., London, GB; AN 82-06807E[04] & JP,A,56 161 456 (MINAMOTO KK) 11 December 1981
- DATABASE WPI Derwent Publications Ltd., London, GB; AN 78-23890A[13] & JP,A,50 158 631 (HAYAKAWA RUBBER KK) 22 December 1975

## Description

This invention concerns a method for the production of pre-mixed porous polymeric compositions, particularly, though by no means exclusively, suitable for use in the formation of impact absorbing surfaces or substrates for sports or childrens' play areas.

Known such impact absorbing surfaces comprise granules of natural or synthetic rubber, such as SBR and EPDM for example, in a matrix of polymer, such as polyurethane for example.

The matrix may completely fill the spaces between the granules to give a non-porous composition or may simply coat the surfaces of the granules to cause them to adhere leaving the interstices between the granules void to give a porous product.

Either kind of composition may be laid to form a sports or play surface or to form a substrate to another surface such as that provided by synthetic turf for example.

The compositions are prepared on site immediately before installation by accurately metering out the granules, liquid pre-polymer and, if necessary, a catalyst, and thoroughly mixing them prior to laying in the manner of asphalt.

The on-site preparation necessitates the use of mixing equipment and trained operators regardless of the size of the project. It would be desirable to eliminate the need for accurate on-site metering of constituent materials and thorough mixing thereof by pre-mixing the granule and pre-polymer and storing this mixture for later application. However, attempts to do so have previously been thwarted by unwanted polymerisation of the pre-polymer induced at mixing by the presence of moisture on the surface of the granules or curing agents present in the granules and after bagging by the diffusion of atmospheric moisture through the bag walls.

JP-A-59/041 501 discloses a method wherein the rubber is coated with a polyol or polyamine and a reaction catalyst and mixed within a prepolymer. Polymerisation will start to occur as soon as the mixture is formed.

EP-A-216 344 discloses a method wherein water is removed from the rubber before mixing with the prepolymer. No encapsulation is envisaged.

It is an object of the present invention to provide a method and materials for production of a pre-mixed porous composite which overcomes the disadvantages aforesaid.

According to the invention there is provided a method of producing a pre-mixed porous polymeric composition comprising the steps of:
encapsulating granules of rubber to isolate any contained curing agent or water;
mixing a moisture curing quasi prepolymer or prepolymer with the encapsulated granules in a low moisture or moisture free environment, the amount of quasi prepolymer or prepolymer being sufficient to coat the surfaces of the encapsulated granules so that, once the quasi prepolymer or prepolymer has polymerised, the encapsulated granules are adhered whilst the interstices between the encapsulated granules are left void;
depositing the mixture, in a low moisture or moisture free environment, into containers which are impermeable to water vapour or which have a low water transmission rate;
storing the mixture containers for later use;
when required, and without further mixing, applying the composition to a suitable sub-base and allowing the composition to polymerise by reaction with water.

Any water present may be removed from the granules prior to encapsulation.

The water to effect polymerisation may comprise atmospheric water or water applied as an atomised mist.

The granules may comprise natural or synthetic rubber and may be in the size range of from 1 mm to 10 mm.

The encapsulating agent may be polyurethane.

Processing of the granules may be carried out in a closed reactor or in an open system maintained at positive pressure by a stream of moisture free gas.

The removal of water from the rubber granules may be effected by evaporation at temperatures greater than room temperature. The evaporation may be carried out in a tunnel kiln.

Alternatively, the water may be removed from the granules by washing with a moisture free solvent and the granules dried by a stream of moisture free gas.

In both of the above instances, the moisture free gas may be dry carbon dioxide, dry nitrogen or moisture free air.

The pre-polymer may be polyurethane based.

The pre-polymer may contain a catalyst in sufficient quantity so as not to cause polymerisation in the stored container but reduce the time required for polymerisation after application of the composition.

The encapsulation ofthe granules and the mixing of pre-polymer with the rubber granules may be carried out with ribbon mixers.

The water may be removed from the rubber granules by a chemical reaction.

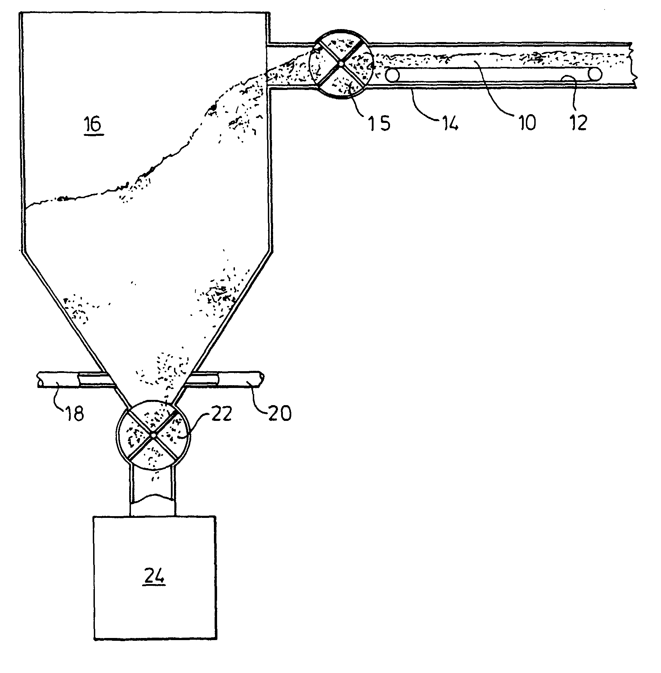

A method of producing a pre-mixed porous polymeric composition in accordance with the present invention will now be described with reference to the accompanying drawing which shows a plant design for the production of pre-mixed polymeric compositions wherein water is removed from the rubber granules by evaporation.

Rubber granules 10 of between 1 and 10 mm diameter are fed onto the conveyor belt 12 of a tunnel kiln 14. A portion of the tunnel kiln is heated to a temperature well in excess of room temperature, and the granules are slowly passed through this portion in order to evaporate moisture from the surface of the granules. In a typical evaporation process the granules may be heated to temperatures of around 160°C for a period of about 10 minutes.

The granules, now near moisture free, are passed into a ribbon mixer 15. A Diphenylmethane-4, 4'Di-Isocyanate pre-polymer is metered at the rate of 0.5% to 5% by weight of granules into the mixer 15.

The pre-polymer cures on the hot granules to encapsulate them with a coating of polyurethane. The granule/ pre-polymer mixture does not agglomerate due to the action of the mixer.

The encapsulated granules are emptied into a hopper 16. A stream of dry, refrigerated carbon dioxide or nitrogen gas or moisture free air is expanded into the bottom of the hopper at positive pressure with respect to ambient gas pressure via gas input ports 18,20. The gas stream has the effect of cooling the hot granules. The now heated exhaust gas from the hopper is ducted through the tunnel kiln at positive pressure; this process inhibits the intake of wet, atmospheric air into the tunnel kiln.

From the hopper the granules are metered into a ribbon mixer 22 along with an appropriate amount (5% to 35% by weight of the pre-coated granules) of a moisture curing polyurethane based pre-polymer. A catalyst such as amine based may be added with the pre-polymer in sufficient quantity so as not to cause polymerisation during storage but to reduce the time required for polymerisation after application of the composition. The positive pressure of the dry gas also prevents ingress of wet, atmospheric air during this operation.

The mixture of dry granules and pre-polymer from the ribbon mixer is ducted to a bagging assembly 24, wherein water impermeable bags are filled with the granule/pre-polymer mixture. The water impermeable bags may comprise aluminium foil lined polythene sacks. The bags are opened, filled and sealed in the stream of dry gas, and once again the positive pressure of the gas stream inhibits seepage of wet, atmospheric air into the dry confines of the bagging assembly and the bag itself.

After sealing, the bags of mixed polymeric composition may be stored before use. At ordinary temperatures storage for up to a year is possible. The water transmission rate of the containers is an important factor in determining the shelf-life of the product. This storage lifetime may be extended still further by storing at cooler temperatures. The polymeric composition may be installed to produce an impact absorbing surface by simply emptying the bags ofper-mixed polymeric composition and spreading the composition on a suitable sub-base. The composition polymerises by reaction with ambient, atmospheric water vapour or by reaction with water applied as an atomised mist.

A variation involves the removal of moisture from the granules by washing same with a dry solvent.

Another variation involves coating the granules with an agent such as an isocyanate. The agent removes water from the surface of the granules by chemical reaction.

## Claims

1. A method of producing a pre-mixed porous polymeric composition comprising the steps of:-
encapsulating granules of rubber to isolate any contained curing agent or water;
mixing a moisture curing quasi pre-polymer or prepolymer with the encapsulated granules in a low moisture or moisture free environment, the amount of quasi prepolymer or prepolymer being sufficient to coat the surfaces of the encapsulated granules so that, once the quasi prepolymer or prepolymer has polymerised, the encapsulated granules are adhered whilst the interstices between the encapsulated granules are left void;
depositing the mixture, in a low moisture or moisture free environment, into containers which are impermeable to water vapour or which have a low water transmission rate;
storing the mixture containing containers for later use; and
when required, and without further mixing, applying the composition to a suitable sub-base and allowing the composition to polymerise by reaction with water.

2. A method according to claim 1 wherein water is removed from the granules prior to encapsulation.

3. A method according to claim 2 wherein the removal of water from the rubber granules is effected by evaporation at temperatures greater than room temperature.

4. A method according to claim 2 wherein the water is removed from the granules by washing with a moisture free solvent and the granules dried by a stream of moisture free gas.

5. A method according to claim 2 wherein the water is removed from the rubber granules by a chemical reaction.

6. A method according to any preceding claim wherein the granules comprise natural or synthetic rubber and are in the size range of from 1 mm to 10 mm.

7. A method according to any preceding claim wherein the encapsulating agent is polyurethane.

8. A method according to any preceding claim wherein the prepolymer is polyurethane based.

9. A method according to any preceding claim wherein the prepolymer contains a catalyst in sufficient quantity so as not to cause polymerisation in the stored container but reduce the time required for polymerisation after application of the composition.

10. A method according to any preceding claim wherein processing of the granules is carried out in a closed reactor or in an open system maintained at positive pressure by a stream of moisture free gas.

## Patentansprüche

1. Verfahren zum Herstellen einer vorgemischten porösen Polymerzusammensetzung, welches die Schritte aufweist:
Einkapseln von Körnchen aus Gummi, um jegliches enthaltene Härtungsmittel oder Wasser zu isolieren;
Mischen eines feuchtigkeitshärtenden Quasi-Vorpolymerisats oder Vorpolymerisats mit den eingekapselten Körnchen in einer Umgebung mit geringer Feuchtigkeit oder feuchtigkeitsfreien Umgebung, wobei die Menge des Quasi-Vorpolymerisats oder Vorpolymerisats ausreichend ist, um die Oberflächen der eingekapselten Körnchen so zu bedecken, daß, sobald das Quasi-Vorpolymerisat oder Vorpolymerisat polymerisiert hat, die eingekapselten Körnchen aneinander hängen, während die Zwischenräume zwischen den eingekapselten Körnchen leer sind;
Ablagern der Mischung in Behältern in einer Umgebung mit geringer Feuchtigkeit oder feuchtigkeitsfreien Umgebung, welche für Wasserdampf undurchlässig sind oder welche eine niedrige Wasserdurchlaßrate haben;
Speichern der die Mischung enthaltenden Behälter für späteren Gebrauch; und
wenn dies gefordert wird, ohne weiteres Mischen, Aufgeben der Zusammensetzung auf eine geeignete Unterlage, wobei der Zusammensetzung ermöglicht wird, durch Reaktion mit Wasser zu polymerisieren.

2. Verfahren nach Anspruch 1, worin vor der Einkapselung Wasser aus den Körnchen entfernt wird.

3. Verfahren nach Anspruch 2, worin die Entfernung von Wasser aus den Gummikörnchen durch Verdampfung bei Temperaturen, die höher als die Raumtemperatur sind, bewirkt wird.

4. Verfahren nach Anspruch 2, worin das Wasser aus den Körnchen durch Waschen mit einem feuchtigkeitsfreien Lösungsmittel und Trocknen der Körnchen durch einen Strom aus feuchtigkeitsfreiem Gas entfernt wird.

5. Verfahren nach Anspruch 2, worin das Wasser durch eine chemische Reaktion aus den Gummikörnchen entfernt wird.

6. Verfahren nach einem der vorhergehenden Ansprüche, worin die Körnchen natürlich nur synthetischen Gummi aufweisen und im Größenbereich von 1 mm bis 10 mm sind.

7. Verfahren nach einem der vorhergehenden Ansprüche, worin das Einkapselungsmittel Polyurethan ist.

8. Verfahren nach einem der vorhergehenden Ansprüche, worin das Vorpolymerisat auf Polyurethan basiert.

9. Verfahren nach einem der vorhergehenden Ansprüche, worin das Vorpolymerisat einen Katalysator in so ausreichender Menge enthält, daß eine Polymerisation in dem gespeicherten Behälter nicht bewirkt wird, aber die für die Polymerisation erforderliche Zeit nach dem Aufgeben der Zusammensetzung verkürzt wird.

10. Verfahren nach einem der vorhergehenden Ansprüche, worin die Verarbeitung der Körnchen in einem geschlossen Reaktor oder in einem offenen System, das durch einen Strom aus feuchtigkeitsfreiem Gas auf positivem Druck gehalten wird, durchgeführt wird.

## Revendications

1. Méthode de production d'une composition polymère poreuse prémélangée comprenant les étapes :
de l'encapsulation de granulés de caoutchouc pour isoler tous les agents vulcanisants et l'eau qu'ils contiennent ;
du mélange d'un quasi prépolymère ou d'un prépolymère durcissant à l'humidité avec les granulés encapsulés, dans un environnement exempt d'humidité ou à faible taux d'humidité, la quantité de quasi prépolymère ou de prépolymère étant suffisante pour enrober les surfaces des granulés encapsulés de telle sorte que, une fois que le quasi prépolymère ou prépolymère s'est polymérisé, les granulés encapsulés soient collés mais que les interstices entre les granulés encapsulés restent vides ;
du dépôt du mélange, dans un environnement exempt d'humidité ou à faible taux d'humidité, dans des conteneurs imperméables à la vapeur d'eau ou ayant un faible taux de transmission de l'eau ;
de la conservation du mélange dans les conteneurs pour leur utilisation ultérieure et
au moment opportun, et sans autre homogénéisation, de l'application de la composition sur une sous-base appropriée et de l'abandon de la composition pour qu'elle polymérise par réaction avec l'eau.

2. Méthode selon la revendication 1, dans laquelle l'eau est éliminée des granulés avant l'encapsulation.

3. Méthode selon la revendication 2, dans laquelle l'élimination de l'eau des granulés de caoutchouc est effectuée par évaporation à des températures supérieures à la température ambiante.

4. Méthode selon la revendication 2, dans laquelle l'eau est éliminée des granulés par un lavage par un solvant exempt d'humidité et les granulés sont séchés par un courant de gaz exempt d'humidité.

5. Méthode selon la revendication 2, dans laquelle l'eau est éliminée des granulés de caoutchouc par une réaction chimique.

6. Méthode selon une quelconque des revendications précédentes, dans laquelle les granulés comprennent du caoutchouc naturel ou synthétique et ont des dimensions de 1 mm à 10 mm.

7. Méthode selon une quelconque des revendications précédentes, dans laquelle l'agent d'encapsulation est du polyuréthanne.

8. Méthode selon une quelconque des revendications précédentes, dans laquelle le prépolymère est à base de polyuréthanne.

9. Méthode selon une quelconque des revendications précédentes, dans laquelle le prépolymère contient un catalyseur en une quantité suffisante pour qu'il ne produise pas de polymérisation dans le conteneur de stockage, mais qu'il réduise la durée requise pour la polymérisation après application de la composition.

10. Méthode selon une quelconque des revendications précédentes, dans laquelle le traitement des granulés est conduit dans un réacteur fermé ou dans un système ouvert maintenu sous une pression positive par un courant de gaz exempt d'humidité.
